# EUROPÄISCHE PATENTSCHRIFT

(11) **EP 2 585 346 B1**
(45) Veröffentlichungstag und Bekanntmachung des Hinweises auf die Patenterteilung: **21.10.2015**
(21) Anmeldenummer: 11724242.0
(22) Anmeldetag: 10.06.2011
(51) Int. Cl.: B60T 8/48

(54) **HYDRAULISCHE FAHRZEUGBREMSANLAGE**
HYDRAULIC VEHICLE BRAKE SYSTEM
INSTALLATION DE FREINAGE HYDRAULIQUE DE VÉHICULE

(30) Priorität: 22.06.2010 DE 102010030321
(43) Veröffentlichungstag der Anmeldung: 01.05.2013
(73) Patentinhaber: Continental Teves AG & Co. oHG, 60488 Frankfurt (DE)
(72) Erfinder: DINKEL, Dieter, 65824 Schwalbach (DE)
(86) Internationale Anmeldenummer: PCT/EP2011/059666
(87) Internationale Veröffentlichungsnummer: WO 2011/160963

(56) Entgegenhaltungen:
- WO-A1-98/31576
- WO-A1-2004/101308
- WO-A1-2008/135301
- DE-A1- 4 002 635
- DE-A1- 19 604 134
- DE-A1- 19 728 302
- JP-A- 2006 137 221
- JP-A- 2009 202 678

## Beschreibung

Die Erfindung betrifft eine hydraulische Fahrzeugbremsanlage nach dem Oberbegriff des Patentanspruchs 1.

Die JP 2006 137221 A offenbart eine hydraulische Fahrzeugbremsanlage der gattungsbildenden Art, mit einer Bremsleitung, die einen an einem drucklosen Vorratsbehälter angeschlossenen Bremsdruckgeber über ein einlassseitiges Druckmodulationsventil mit einer Radbremse verbindet. Über ein in eine Rücklaufleitung eingesetztes auslassseitiges Druckmodulationsventil ist die Radbremse mit einem Niederdruckspeicher verbindbar, der stromabwärts an einer Pumpe angeschlossen ist, die zur Bremsdruckregelung Druckmittel aus dem Niederdruckspeicher entnimmt und über das einlassseitige Druckmodulationsventil zur Radbremse sowie über ein stromaufwärts zum einlassseitigen Druckmodulationsventil in der Bremsleitung angeordnetes Trennventil in Richtung des Bremsdruckgebers fördert. Zwischen dem Bremsdruckgeber und dem Niederdruckspeicher mündet in die Rücklaufleitung ein Pumpensaugleitung ein, in die ein elektromagnetisch öffnendes Umschaltventil eingesetzt ist, sodass bei einer Betätigung des Bremsdruckgebers der vom Bremsdruckgeber initiierte Druck bei Wunsch oder Bedarf unter Umgehung der Radbremse über das Umschaltventil dem Niederdruckspeicher zuführbar ist.

Aus EP 0 950 004 B1 ist bereits eine hydraulische Fahrzeugbremsanlage bekannt geworden, die über eine Einrichtung zur Blockierschutz-, Antriebsschlupfs- und Fahrdynamikregelung verfügt. Jeder Bremskreis dieser Fahrzeugbremsanlage ist mit einer Bremsleitung versehen, die einen Bremsdruckgeber mit einem paar Radbremsen verbindet, wobei zur Regelung des Radbremsdrucks in die Bremsleitung als auch in eine mit den Radbremsen verbundene Rücklaufleitung Druckmodulationsventile eingesetzt sind, die in Verbindung mit einer Rückförderpumpe den Bremsdruck im Sinne von Druckaufbau-, Druckhalte- und Druckabbauphasen regeln. Stromaufwärts zur Rückförderpumpe ist an der Rücklaufleitung ein Niederdruckspeicher angeschlossen, um während einer Druckabbauphase das Druckmittel aufzunehmen, welches rasch aus einer der blockiergefährdeten Radbremsen abgeführt werden muss.

Damit sichergestellt ist, dass beim Einsatz einer Bremsanlage nach WO 2004/101308 A1 in einem Elektro- oder Hybridfahrzeug die Radbremsen während einer Verzögerung des Fahrzeugs zum Zwecke einer möglichst hohen Energierückgewinnung im Generatorbetrieb des Elektro- bzw. Hybridfahrzeugs nicht aktiviert werden, wird vorgeschlagen dass das jeweils in der Rücklaufleitung eingesetzte Druckmodulationsventil geöffnet ist, damit der während einer Bremsbetätigung erzeugte Bremsdruck anstelle zu den Radbremsen in den Niederdruckspeicher gelangen kann. Da der Niederdruckspeicher in der Regel einen federbeaufschlagten, in der Speicherkammer abgedichteten Kolben aufnimmt, bedarf es einem entsprechend hohen Betätigungsdruck, damit anstelle der Radbremsen die Speicherkammer den erzeugten Bremsdruck aufzunehmen vermag. Folglich verursacht der Niederdruckspeicher eine gewisse Hysterese, wodurch ein unerwünschter, signifikanter Druckaufbau in den Radbremsen nicht ausgeschlossen werden kann, der sich nachteilig auf die Energierückgewinnung im Generatorbetrieb des Fahrzeugs auswirkt.

Daher ist es die Aufgabe der vorliegenden Erfindung, eine hydraulische Fahrzeugbremsanlage der gattungsbildenden Art, bei der im Generatorbetrieb des Elektro- bzw. Hybridfahrzeugs kein oder allenfalls nur ein geringfügiger, vernachlässigbarer Druckaufbau in den Radbremsen stattfindet, einfacher zu gestalten.

Diese Aufgabe wird erfindungsgemäß durch die Merkmale des Patentanspruchs 1 gelöst.

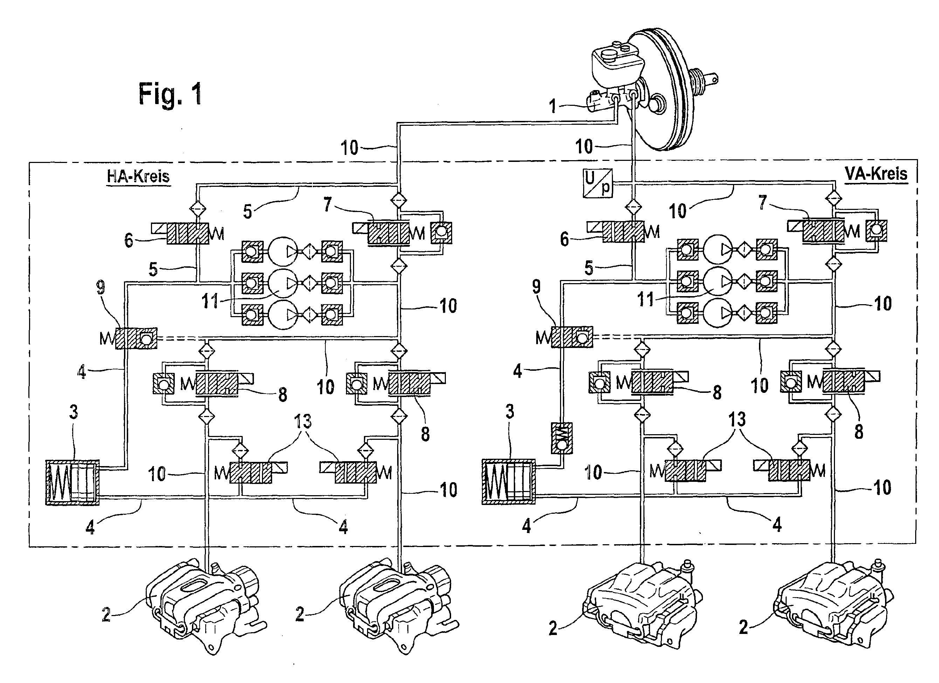

Weitere Merkmale und Vorteile der Erfindung gehen im Nachfolgenden aus der Beschreibung eines Ausführungsbeispiels anhand der Figur 1 hervor.

Die Figur 1 zeigt einen hydraulischen Schaltplan für eine Fahrzeugbremsanlage mit Blockierschutz-, Antriebsschlupfals auch Fahrdynamikregelung, die als Zweikreisbremsanlage ausgeführt ist.

Jeder abgebildete Bremskreis weist eine Bremsleitung 10 auf, die einen Bremsdruckgeber 1 mit einem paar Radbremsen 2 verbindet, wozu die Bremsleitung 10 auf beide Radbremsen 2 verzweigt ist. In jedem Abzweig der Bremsleitung 10 befindet sich stromaufwärts zu jeder Radbremse 2 ein einlassseitiges Druckmodulationsventil 8. Zwischen jedem einlassseitigen Druckmodulationsventil 8 und der zugehörigen Radbremse 2 ist an jeder Bremsleitung 10 ein Abzweig einer Rücklaufleitung 4 angeschlossen, in die jeweils ein auslassseitiges Druckmodulationsventil 13 eingesetzt ist, das in der elektromagnetisch betätigten Offenstellung jeweils die angeschlossene Radbremse 2 mit einem Niederdruckspeicher 8 verbindet, dessen Kolben von einer Speicherfeder beaufschlagt ist.

Die abgebildete Fahrzeugbremsanlage ist nach dem Rückfördersystem konzipiert, sodass in jedem Bremskreis eine von einem Elektromotor angetriebene Pumpe 11 eingesetzt ist, die während einer Bremsdruckregelung das im Niederdruckspeicher 3 aufgenommene Druckmittel wieder über die einlassseitigen Druckmodulationsventile 8 zu den beiden Radbremsen 2 eines jeden Bremskreises sowie in Richtung des Bremsdruckgebers 1 zurückfördert. Zur Komfort- als auch Leistungsverbesserung handelt es sich bei der abgebildeten Pumpe beispielhaft um eine sogenannte Sechskolben-Pumpe, sodass jeder Bremskreis zur Druckmittelförderung über jeweils drei Kolben verfügt.

Die bisher beschriebenen Einzelheiten umfassen die für eine Blockierschutzregelung notwendigen Funktionselemente. Damit auch eine Antriebsschlupf- als auch Fahrdynamikregelung möglich ist, befindet sich ferner in jedem Bremskreis zwischen dem Bremsdruckgeber 1 und dem einlassseitigen Druckmodulationsventil 8 ein in Grundstellung geöffnetes Trennventil 7 sowie stromaufwärts zu diesem Trennventil 7 zusätzlich eine mit einem elektromagnetischen Umschaltventil 6 versehene Pumpensaugleitung 5, um für eine Fahrdynamikregelung eine direkte Druckmittelversorgung der Pumpe 11 aus dem Bremsdruckgeber 1 bzw. dessen Vorratsbehälter zu gewährleisten, wozu sodann das in Grundstellung normalerweise geschlossene Umschaltventil 6 elektromagnetisch geöffnet ist. Sowohl in der Fahrdynamik- als auch Antriebschlupfregelung nimmt das Trennventil 7 elektromagnetisch erregt seine Sperrstellung ein, damit das von der Pumpe 11 zu den Radbremsen 2 zu fördernde Druckmittel nicht in den Bremsdruckgeber 1 entweicht.

Die Erfindung sieht vor, dass bei einer Betätigung des Bremsdruckgebers 1 durch den Fahrer zur vollen Ausnutzung der kinetischen Energie in einem Elektro- oder Hybridfahrzeug der vom Bremsdruckgeber 1 initiierte Druck unter Umgehung der Radbremse 2 ausschließlich dem Niederdruckspeicher 3 und folglich nicht der normalerweise zur Abbremsung des Fahrzeugs vorgesehenen Radbremse(n) 2 zuführbar ist. Dieser Wunsch oder vielmehr dieser Bedarf, das Fahrzeug nicht mittels der Radbremsen 2 zu verzögern, liegt dann vor, wenn die anhand der Figur 1 vorgestellte Fahrzeugbremsanlage mit ihren erfindungswesentlichen Merkmalen im Generatorbetrieb eines Elektro- oder Hybridfahrzeug zum Einsatz gelangt. Die vorgestellte Erfindung führt nämlich im Generatorbetrieb zu einer höheren Energierückgewinnung, da infolge der erfindungsgemäß nicht hydraulisch beaufschlagten Radbremsen 2 dem Elektromotor im Generatorbetrieb zwangsläufig eine höhere kinetische Energie zur Stromerzeugung zur Verfügung steht.

Nach Figur 1 ist daher zur Umgehung der Radbremse 2 der zur schlupffreien Abbremsung des Fahrzeugs betätigte Bremsdruckgeber 1 über die in die Rücklaufleitung 4 einmündende Pumpensaugleitung 5 unmittelbar mit dem Niederdruckspeicher 3 verbunden, wozu das elektromagnetische Umschaltventil 6 geöffnet ist, während das Trennventil 7 und die einlass- und auslassseitigen Druckmodulationsventile 8, 13 geschlossen sind. Das während der Betätigung des Bremsdruckgebers 1 in den Niederdruckspeicher 3 verdrängte Druckmittelvolumen vermittelt dem Fahrer hierbei ein an sich vertrautes und gewünschtes Pedalgefühl, ohne dass die Radbremse(n) 2 im Generatorbetrieb aktiv zur Fahrzeugabbremsung beitragen.

Allerdings bedarf es unabhängig von der Art der Bremsdruckregelung zur aktiven Fahrzeugabbremsung mittels der Radbremsen 2 einer richtungsabhängigen Unterbrechung der hydraulischen Verbindung des Bremsdruckgebers 1 mit dem Niederdruckspeicher 3, weshalb ein hydraulisch betätigbares Umschaltventil 9 in die Rücklaufleitung 4 eingesetzt ist, das zwischen der Einmündung der Pumpensaugleitung 5 in die Rücklaufleitung 4 und dem Niederdruckspeicher 3 angeordnet ist. Das hydraulisch betätigbare Umschaltventil 9 ist als 2/2-Wegesitzventil ausgeführt, das zum Zwecke einer Aktivbremsung durch einen in der Bremsleitung 10 initiierten Bremsdruck in die richtungsabhängige Sperrstellung schaltbar ist, in welcher der Niederdruckspeicher 3 ausschließlich in Richtung der Pumpe 11 durchströmbar ist. Folglich ist über das elektromagnetische Umschaltventil 6 kein hydraulischer Kurzschluss zum Niederdruckspeicher 3 mehr möglich, sobald das hydraulische Umschaltventil 9 seine richtungsabhängige Sperrstellung einnimmt.

Der Bremsdruckaufbau erfolgt außerhalb des Generatorbetriebs auf an sich bekannte Weise jeweils für jede Radbremse 2 über das geöffnete Trennventil, (oder ggf. über das elektromagnetisch geöffneten Umschaltventil 6 und die Pumpe 11, wenn das Trennventil 7 geschlossen ist) in Richtung des einlassseitigen Druckmodulationsventils 8, sodass der Niederdruckspeicher 3 erst nach dem Öffnen des auslassseitigen Druckmodulationsventils zum Bremsdruckabbau mit dem Druck der Radbremse(n) 2 beaufschlagt wird. Die anschließende Entleerung des Niederdruckspeichers 3 erfolgt ungehindert über die als Rückschlagventil symbolisch dargestellte richtungsabhängige Schaltstellung des hydraulisch betätigten Umschaltventils 9 zur Saugseite der Pumpe 11.

### Bezugszeichenliste

- 1: Bremsdruckgeber
- 2: Radbremse
- 3: Niederdruckspeicher
- 4: Rücklaufleitung
- 5: Pumpensaugleitung
- 6: Umschaltventil
- 7: Trennventil
- 8: Druckmodulationsventil
- 9: Umschaltventil
- 10: Bremsleitung
- 11: Pumpe
- 13: Druckmodulationsventil

## Patentansprüche

1. Hydraulische Fahrzeugbremsanlage mit einer Bremsleitung (10), die einen an einem drucklosen Vorratsbehälter angeschlossenen Bremsdruckgeber (1) mit einer Radbremse (2) verbindet, mit einem zwischen dem Bremsdruckgeber (1) und der Radbremse (2) in die Bremsleitung (10) eingesetzten einlassseitigen Druckmodulationsventil (8), mit einem auslassseitigen Druckmodulationsventil (13), das in eine Rücklaufleitung (4) eingesetzt ist, welche die Radbremse (2) mit einem Niederdruckspeicher (3) verbindet, mit einer an der Rücklaufleitung (4) stromabwärts zum Niederdruckspeicher (3) angeordneten Pumpe (11), die zur Bremsdruckregelung Druckmittel aus dem Niederdruckspeicher (3) entnimmt und über das einlassseitige Druckmodulationsventil (8) zur Radbremse (2) als auch über ein stromaufwärts zum einlassseitigen Druckmodulationsventil (8) in der Bremsleitung (10) angeordnetes Trennventil (7) in Richtung des Bremsdruckgebers (1) fördert, sowie mit einer zwischen dem Bremsdruckgeber (1) und dem Niederdruckspeicher (3) in die Rücklaufleitung (4) einmündenden Pumpensaugleitung (5), in die ein elektromagnetisch öffnendes Umschaltventil (6) eingesetzt
ist, wobei bei einer Betätigung des Bremsdruckgebers (1) der vom Bremsdruckgeber (1) initiierte Druck bei Wunsch oder Bedarf unter Umgehung der Radbremse (2) dem Niederdruckspeicher (3) zuführbar ist, indem der Bremsdruckgeber (1) über die in die Rücklaufleitung (4) einmündende Pumpensaugleitung (5) unmittelbar mit dem Niederdruckspeicher (3) verbunden ist, wozu das elektromagnetische Umschaltventil (6) geöffnet ist, sowie das Trennventil (7) und das einlassseitige Druckmodulationsventil (8) geschlossen sind, **dadurch gekennzeichnet, dass** zur richtungsabhängigen Unterbrechung der hydraulischen Verbindung des Bremsdruckgebers (1) mit dem Niederdruckspeicher (3) ein hydraulisch betätigbares Umschaltventil (9) in die Rücklaufleitung (4) eingesetzt ist, das zwischen der Einmündung der Pumpensaugleitung (5) in die Rücklaufleitung (4) und dem Niederdruckspeicher (3) angeordnet ist.

2. Hydraulische Fahrzeugbremsanlage nach Anspruch 1, **dadurch gekennzeichnet, dass** das hydraulisch betätigbare Umschaltventil (9) als 2/2-Wegesitzventil ausgeführt ist, das durch einen in der Bremsleitung (10) initiierten Bremsdruck in die richtungsabhängige Sperrstellung schaltbar ist, in welcher der Niederdruckspeicher (3) ausschließlich in Richtung der Pumpe (11) durchströmbar ist.

## Claims

1. Hydraulic vehicle brake system having a brake line (10), which connects a brake pressure sensor (1) attached to a non-pressurized storage vessel to a wheel brake (2), having a pressure modulation valve (8) on the inlet side inserted in the brake line (10) between the brake pressure sensor (1) and the wheel brake (2), having a pressure modulation valve (13) on the outlet side, which is inserted in a return line (4) connecting the wheel brake (2) to a low-pressure accumulator (3), having a pump (11) disposed on the return line (4) upstream of the low-pressure accumulator (3), said pump removing pressurizing medium from the low-pressure accumulator (3) to regulate the brake pressure and conveying it via the pressure modulation valve (8) on the inlet side to the wheel brake (2) and also via an isolation valve (7) disposed in the brake line (10) upstream of the pressure modulation valve (8) on the inlet side in the direction of the brake pressure sensor (1), and also having a pump suction line (5) discharging into the return line (4) between the brake pressure sensor (1) and the low-pressure accumulator (3), in which pump suction line an electromagnetically opening changeover valve (6) is inserted, **wherein** when the brake pressure sensor (1) is actuated, the pressure initiated by the brake pressure sensor (1) can be fed to the low-pressure accumulator (3), bypassing the wheel brake (2), where desired or necessary by the brake pressure sensor (1) being directly connected to the low-pressure accumulator (3) via the pump suction line (5) discharging into the return line (4), for which purpose the electromagnetic changeover valve (6) is open, and also the isolation valve (7) and the pressure modulation valve (8) on the inlet side are closed, **characterized in that** for the directionally dependent break in the hydraulic connection between the brake pressure sensor (1) and the low-pressure accumulator (3), a hydraulically actuatable changeover valve (9) is inserted in the return line (4), said valve being disposed between the outlet of the pump suction line (5) into the return line (4) and the low-pressure accumulator (3).

2. Hydraulic vehicle brake system according to Claim 1, **characterized in that** the hydraulically actuatable changeover valve (9) is configured as a 2/2-way seat valve, which can be switched into the directionally dependent closed position by a brake pressure initiated in the brake line (10), in which closed position the low-pressure accumulator (3) can only be flowed through in the direction of the pump (11).

## Revendications

1. Système de freinage hydraulique de véhicule muni d'une conduite de frein (10), qui relie un transducteur de pression de freinage (1) raccordé à un réservoir sans pression à un frein de roue (2), muni d'une soupape modulatrice de pression (8) du côté de l'admission insérée entre le transducteur de pression de freinage (1) et le frein de roue (2) dans la conduite de frein (10), muni d'une soupape modulatrice de pression (13) du côté de l'évacuation, qui est insérée dans une conduite de retour (4) qui relie le frein de roue (2) à un réservoir à basse pression (3), muni d'une pompe (11) installée sur une conduite de retour (4) en aval du réservoir à basse pression (3), qui prélève un fluide de pression dans le réservoir à basse pression (3) en vue de la régulation de la pression de freinage et l'achemine par la soupape modulatrice de pression (8) du côté de l'admission vers le frein de roue (2), et dans la direction du transducteur de pression de freinage (1) par une soupape d'arrêt (7) installée dans la conduite de frein (10) en amont de la soupape modulatrice de pression (8) placée du côté de l'admission, et muni d'une conduite d'aspiration de pompe (5) débouchant entre le transducteur de pression de freinage (1) et le réservoir à basse pression (3) dans la conduite de retour (4), dans laquelle est insérée une soupape d'inversion (6) qui s'ouvre par une action électromagnétique, en cas d'activation du transducteur de pression de freinage (1), la pression créée par le transducteur de pression de freinage (1) pouvant être fournie - si on le souhaite ou au besoin - en contournant le frein de roue (2) au réservoir à basse pression (3), par le fait que le transducteur de pression de freinage (1) est directement relié au réservoir à basse pression (3) par la conduite d'aspiration de la pompe (5) débouchant dans la conduite de retour (4), ce qui entraîne que la soupape d'inversion électromagnétique (6) est ouverte, et pour quoi la soupape d'arrêt (7) et la soupape modulatrice de pression d'admission (8) sont fermées, **caractérisé en ce que** pour l'interruption de la liaison hydraulique entre le transducteur de pression de freinage (1) et le réservoir à basse pression (3) en fonction de la direction, une soupape d'inversion à commande hydraulique (9) est insérée dans la conduite de retour (4) et est placée entre l'embouchure de la conduite d'aspiration de la pompe (5) dans la conduite de retour (4) et le réservoir à basse pression (3).

2. Système de freinage hydraulique de véhicule selon la revendication 1, **caractérisé en ce que** la soupape d'inversion à commande hydraulique (9) est configurée en tant que soupape à siège à 2/2 voies qui est commutable par une pression de freinage exercée dans la conduite de freinage (10) dans la position de blocage dépendant de la direction, dans laquelle le réservoir à basse pression (3) peut être traversé exclusivement par un écoulement dans la direction de la pompe (11).
